# EUROPEAN PATENT SPECIFICATION

(11) **EP 0 412 252 B1**
(45) Date of publication and mention of the grant of the patent: **05.11.1997**
(21) Application number: 90110138.6
(22) Date of filing: 29.05.1990
(51) Int. Cl.: G06F 17/14

(54) **System and circuit for the calculation of a bidimensional discrete transform**
Verfahren und Schaltungsanordnung zur zweidimensionalen diskreten Transformation
Méthode et circuit pour le calcul d'une transformée discrète bidimensionnelle

(30) Priority: 13.07.1989 IT 2142089
(43) Date of publication of application: 13.02.1991
(73) Proprietor: ALCATEL ALSTHOM COMPAGNIE GENERALE D'ELECTRICITE, 75008 Paris (FR)
(72) Inventor: Cucchi, Silvio, I-20093 Gaggiano (MI) (IT); Fratti, Marco, I-20052 Monza (IT)
(74) Representative: Strehl Schübel-Hopf Groening & Partner

(56) References cited:
- EP-A- 0 275 979

## Description

### Description of the invention

The present invention refers to a system for calculating the bidimensional discrete transform in cosine, according to the preamble of claim 1. Further the invention includes also the circuits for the implementation of the said system. As is well-known, the encoding of television signals is made very efficiently by the use of the discrete transform in cosine (DCT) having dimension 8*8, or, more generally M*M, where M is a power of the number 2.

Considering the commercial television, the number of samples to be processed is very high (typically over 10 millions of samples per second, and for the digital format for studio it is in the order of 27 millions of samples per second) and, in particular, for the high-definition television (HDTV) the sample flow on which it is necessary to operate the DCT is higher than 100 millions per second; in this case more processors operating in parallel are used, but it is obvious the interest in a circuit that makes the bidimensional DCT at a whenever possible higher speed for reducing the number of processors to be used.

There are well-known some circuit fulfilments of the bidimensional DCT made in the form of integrated circuits on silicon basis, that for being able to increase the calculation speed and in the same time keep the logical gate number within reasonable limits; have resort to the calculations in the serial arithmetic.

See in particular the articles by F. Jutland, N. Demassieux, G. Concordel, J. Guichard, E. Cassimatis "A single chip video rate 16∗16 Discrete Cosine Transform" (Proc. Int. Conf. Acoustic, Speech and Signal Processing 1986) and S. Cucchi, F. Molo "DCT based television codec for DS3 digital transmission" (130th SMPTE Technical Conference 1988), where there are described some circuits for the execution of bidimensional DCT using the serial arithmetic. In particular the article by Cucchi and Molo describes the bidimensional DCT 8∗8, made of two monodimensional DCTs of dimension 8, following, for this last one, the calculation scheme proposed by Chen, Fralick and Smith in the article "A fast computational algorithm for the Discrete Cosine Transform (IEEE Trans. on Comm., Sept. 1977).

The execution of the bidimensional DCT of dimension M*M is made decomposing it into two transforms of dimension M and serial arithmetic is used for the calculation thereof, in which for the precision accuracy there are used representations of numbers with B binary ciphers, where B is usually equal to 16; it must be noticed that the words incoming into DCT and the words outgoing from the same DCT (calculation results) are under 16 bits (usually from 8 to 12 bits). As the words on which it is applied the DCT enter the calculation circuit under the form of parallel bits at a speed Rp, and it is made in the following a word transform from the form of parallel bits to the form of serial bits before making the two DCTs (and it is made the inverse transform before sending to output the words resulting from this transform), it appears that the bit speed Rs in the inside of the processor DCT is given by:${\text{R}}_{\text{s}} \text{=} \frac{{\text{R}}_{\text{p}} \text{× 16}}{\text{M}}$ where M is the dimension of DCT, and 16 is the number of serial bits of each word used for making the calculations. Now, in the case of the DCT having dimension 8 (M=8), that is the dimension normally used as the best compromise between the fulfilment complexity and the efficiency of redundancy reduction, it is:${\text{R}}_{\text{s}} \text{= 2} {\text{R}}_{\text{p}}$ i.e. the transfer speed of bits contained in words in serial form is double with respect to the speed of the words incoming into and outgoing from the processor DCT, which on one hand obliges to supply a processor DCT with a clock frequency doubled with respect to the frequency of incoming and outgoing words, and on the other hand to require more high performances as regards the frequency of the calculation elements, or in equivalent manner, keeping constant the speed at which the bits are processed in the inside of the processor, to limit the speed of incoming and outgoing words.

The invention has now the scope of for overcoming the above mentioned drawbacks; as seen, with reference to the case of DCT 8*8 with internal representation of the words including 16 bits, we have:${\text{R}}_{\text{s}} \text{=} \frac{{\text{R}}_{\text{p}} \text{× 16}}{\text{8}}$

The invention consists in the representation of the each word in the form of two serial flows (Sp and Sd) holding 8 bits, instead of a sole serial flow S of 16 bits. The two serial flows are made of - respectively - the bits of even positions (even flow Sp) and the ones of odd position (odd flow Sd) of the processing data. In particular, the elementary calculation structures (adders/ subtractors) are organized for operating onto bit couples instead of onto single bits. In this manner, at each clock stroke it is made a processing onto a bit of even flow Sp and onto a bit of odd flow Sd. Using this technique, it is possibile to get a transfer speed of the word bits in the serial form equal to:${\text{R}}_{\text{s}} \text{=} \frac{{\text{R}}_{\text{p}} \text{× 8}}{\text{8}} \text{=} {\text{R}}_{\text{p}}$

The unavoidable reduction of the calculation speed, due to the necessity of making the processing onto bit couples instead of onto single bits, is insignificant with respect to the factor 2 of bit speed gain Rs in the processor inside.

More generally the invention is applicable to the case in which it is necessary to make a dimensional transform M*M, with M having power 2, and in which the calculations are made in the serial form onto bit couples of words having a length equal to 2 Mbit.

The main characteristics of the system according to the invention are recited in the inventive part of claim 1, while some of its particular features are specified in the claims from 1 to 4.

The invention includes also the circuits for the implementation of the considered system; some preferred fulfilment forms are recited in claims from 6 to 8.

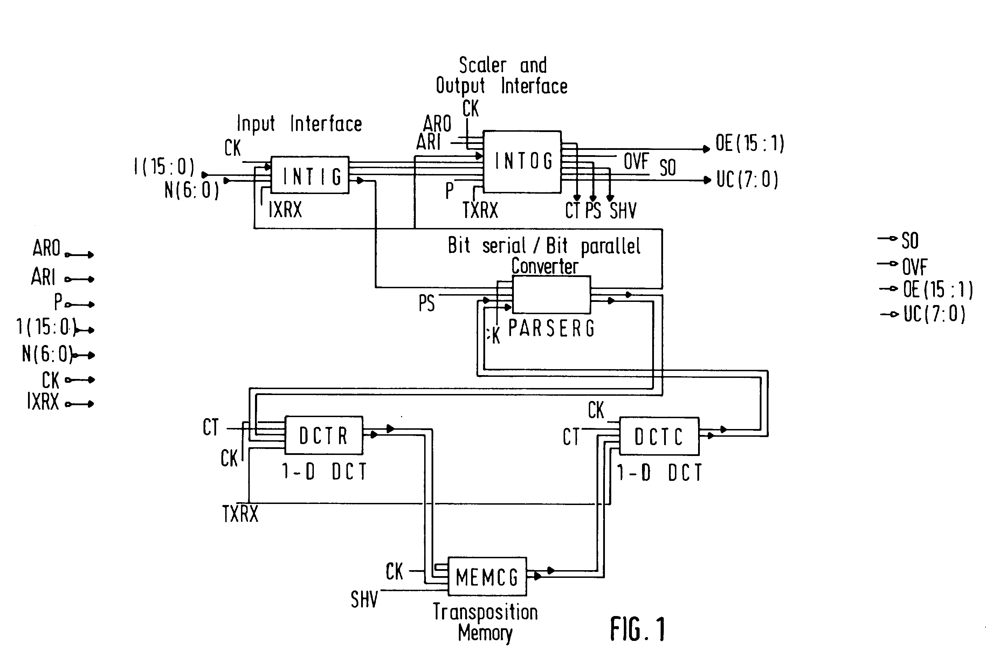

The various features and advantages of the invention shall appear better from the following description, reference to a preferred fulfilment form of chip blocks and with reference to the Figures 1,2,3,4,5,6,7,8.

We premise a short description of a generical bidimensional DCT. If we indicate by X the matrix 8∗8 of input samples, we have:$\text{DCT} \text{(} \text{X} \text{)} {\text{= Y = AXA}}^{\text{T}}$ where A is the transform matrix. Owing to the associative property of the matrix product, we can write:${\text{Y=A(XA}}^{\text{T}} \text{)}$

We can make the first product Z = XA^{T} (monodimensional DCT), operating onto the lines of the matrix X. Then we can make the product Y = A Z (monodimensional DCT), operating onto the columns of the intermediate matrix Z.

Really the matrix products X A^{T} and A Z are made by fast algorithms, for example the ones indicated in the above mentioned article by Chen, Fralick and Smith.

Similarly, after having calculated once the matrix Z, we can calculate Z^{T} (transposed matrix of Z) and then Y^{T} = Z^{T} A^{T}, operating again onto the lines of the matrix Z^{T} (note that the matrix in output is transposed).

Then, generally speaking, a bidimensional DCT can be seen as a cascade of:
- monodimensional DCT transform
- transposition of the intermediate matrix
- monodimensional DCT transform

It is thus necessary to have:
- two calculation blocks that make the monodimensional DCT transform
- a block that carries out the transposition of a matrix.

Further, as the calculations in the chip inside are made by the serial arithmetic while the samples in the inside and at the output of the processor are made in the parallel format, it is necessary to have at disposal a parallel-serial-parallel converter.

### THE "TOP-LEVEL" OF THE DCT PROCESSOR

The Figure 1 shows the block scheme of the bidimensional DCT processor; it carries out the bidimensional DCT 8∗8, both in transmission and in reception (according to the control TXRX). According to what it has been described above, there are present two calculation blocks for carrying out the monodimensional DCT and one block for the transposition of the intermediate matrix.

In particular:
- By TXRZ = 1, DCTR carries out the DCT by lines and DCTC carries out the DCT by columns
- By TXRZ = 0, DCTR carries out the IDCT by columns and DCTC carries out the IDCT by lines.

Then the Figure 1 shows in particular:
a) The calculation blocks DCTR and DCTC
b) The block that makes the conversion from parallel bits to serial bit couples for the incoming words and viceversa for the outgoing words (PARSERG)
c) The block that makes the transposition of the calculation matrix (DCT lines -- DCT columns) (MEMCG).
d) The blocks that make the shifts onto the samples of the transformed signal (INTIG, INTOG).

Further the Figure 1 shows in particular the input-output signals and the control signals internal to the chip:
a) Input signals:
   - I(15:0): input samples, in complement to 2, in parallel format
   - P: reset of internal counters
   - AR1, AR0: selections for the rounding to be made on the data at processing output
   - N (6:0): Shift factor operating onto the DCT coefficients:$\text{0 ≤ N (6:0) ≤ 127}$
   - CK: machine clock input
   - TXRX: transmission/reception selection
b) Output signals
   - OE (15:1): output samples in complement to 2, in parallel format
   - OVF: overflow survey
   - SO : output synchronisation
   - UC (7:0): external output of the counter
c) Control signals internal to the chip
   - CT : control of DCTR and DCTC calculation blocks
   - PS : control of the PARSERG
   - SHV : control of the MEMCG

In the following the description of the blocks forming the processor is provided.

### THE CALCULATION BLOCKS

Referrring now to the Figure 1, the DCTR and DCTC blocks carry out the calculation of the two monodimensional DCTs. The transform operations are implemented according to "Fast" algorithms and they form some calculation "throttles" in cascade (in reception the order of the throttles is inverted with respect to transmission). The main operations made by means of the calculation throttles are: summation, subtraction, multiplication. Using the serial arithmetic and interpreting the multiplication as a succession of partial summations, it can be noticed how it is useful the introduction of an elementary cell that carries out the summation and subtraction operations and then can be also used for the calculation of multiplications.

In the following some operations of the elementary calculation structure are described and it is illustrated its use as basis component of a calculation throttle.

### THE ELEMENTARY ADDER/SUBTRACTOR

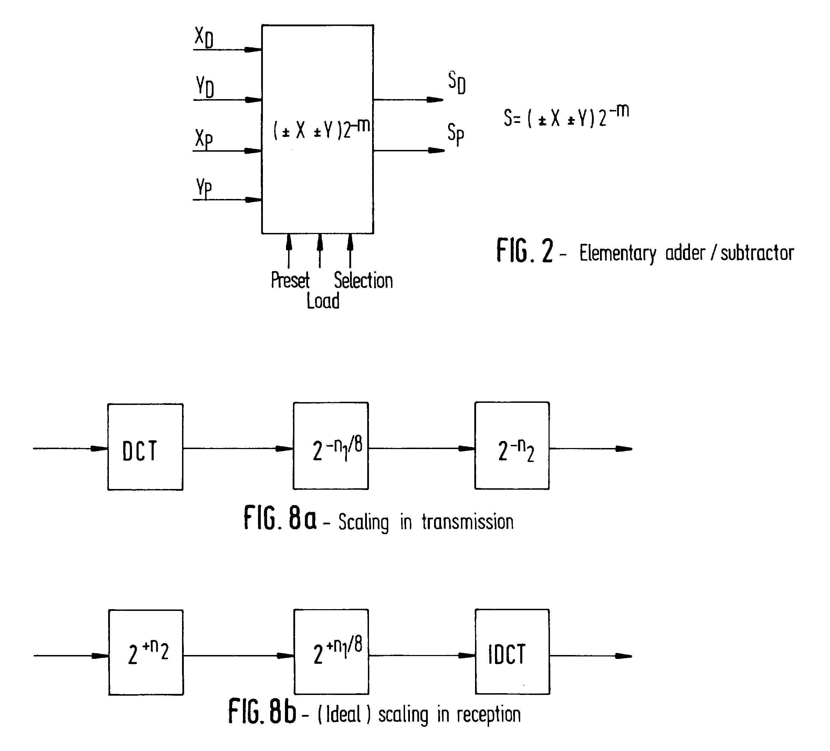

The Figure 2 shows the scheme of an elementary adder/subtractor that works onto serialized bit couples. It represents the main block of the transform operation. The equation S = (±X±Y )2^{-m} indicates that, being given the variable quantities X and Y (positive or negative), it is made a summation or subtraction, and the result must be divided by 2^{m} (weighing according to 2^{-m}).

Being given the input variable X with 16 bits:${\text{X=( x}}_{\text{0}} \text{,} {\text{x}}_{\text{1}} \text{,...,} {\text{x}}_{\text{15}} \text{)}$ it is processed under the form of two serial flows:${\text{X}}_{\text{p}} \text{=} \text{(} {\text{x}}_{\text{0}} {\text{,x}}_{\text{2}} {\text{,...,x}}_{\text{14}} \text{)}$${\text{X}}_{\text{d}} \text{=} \text{(} {\text{x}}_{\text{1}} {\text{,x}}_{\text{3}} {\text{,...,x}}_{\text{15}} \text{)}$ where Xp and Xd are respectively the even serial flow and the odd serial flow (holding 8 bits each) that form it (similarly for the input variable Y). The output variable S with 16 bits:$\text{S =} \text{(} {\text{s}}_{\text{0}} {\text{,s}}_{\text{1}} {\text{,...,s}}_{\text{15}} \text{)}$ is made-up of the serial flows (each holding 8 bits):${\text{S}}_{\text{p}} \text{=} \text{(} {\text{s}}_{\text{0}} {\text{,s}}_{\text{2}} {\text{,...,s}}_{\text{14}} \text{)}$${\text{S}}_{\text{d}} \text{=} \text{(} {\text{s}}_{\text{1}} {\text{,s}}_{\text{3}} {\text{,...,s}}_{\text{15}} \text{)}$

The "Preset", "Load", "Selection" signals, arising from a proper control circuit, must synchronize correctly the instants of start summation-start and summation-end.

The value 2^{-m} is the binary weight of the current summation.

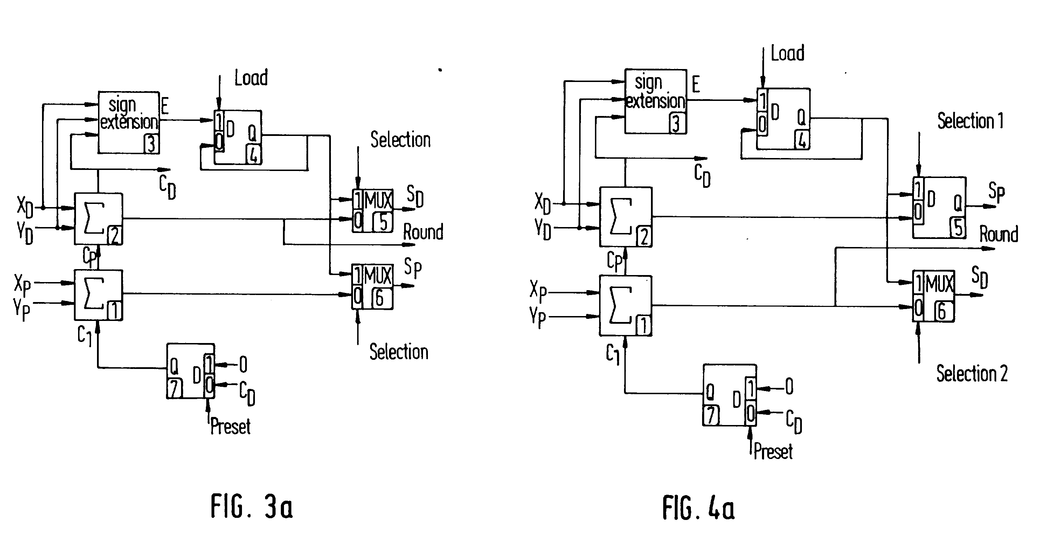

What above said can be shown by an example, referring the Figure 3a, that is an exploded view of the Figure 2.

In particular, we suppose to calculate:$\text{S =} \text{(} \text{X+Y} {\text{)2}}^{\text{-4}}$

Referring to a variable quantity of weigh 2⁰, it is seen how, for being able to carry out the correct summation, it is necessary a sign extension onto four buts. Referring to the Figure 3a ("EVEN" adder):

The blocks "1" and "2" (Full-adders) carry out the summations onto bit couples at input.

The block "3" (exor with 3 inputs) carries out the sign extension of the summation.

The block "7" (Flip-Flop with selection) loads the initial carry (Preset = 1) or the current carry (Preset = 0) of the summation.

The block "4" (Flip-Flop with selection) loads the sign extension of the current summation (Load = 1) or keeps the sign extension of the former summation (Load = 0).

The blocks "5" and "6" (Multiplexer) supply at output the values of the summation (Selection = 0) or the sign extension (Selection = 1). It must be noticed that it is also present a "Round" output (in adition to two serial output flows). In fact the final summation of a multiplication throttle must be made considering a rounding, as the final result must be represented in any case onto two serial flows holding 8 bits.

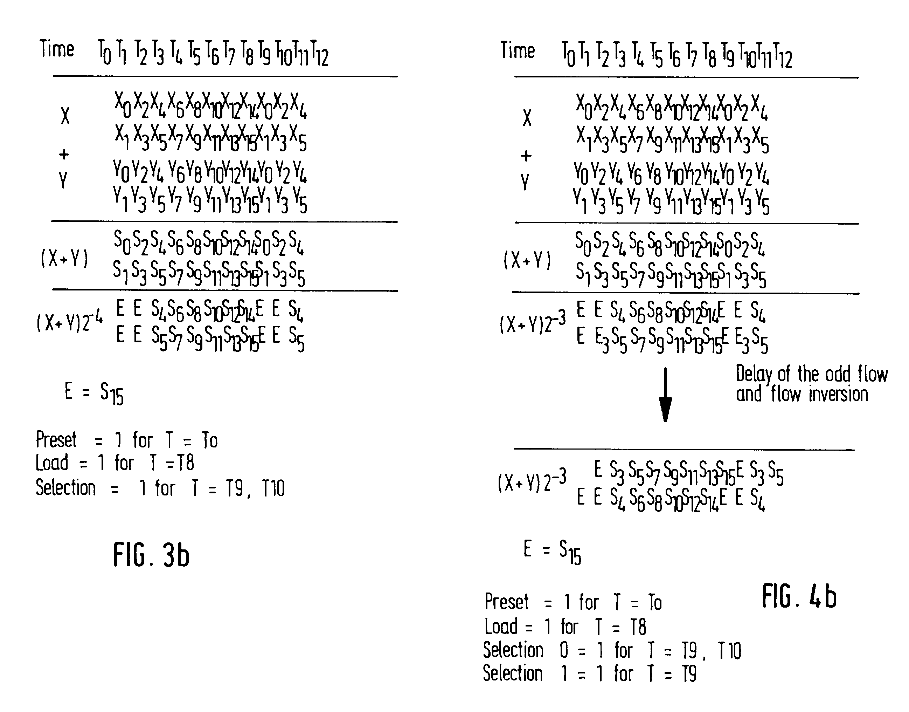

In the following, it shall be shown an example of the "Round" use. The Figure 3b shows a diagram of the summation (X + Y) 2⁻⁴ versus time. It must be noticed as the 2i-th-bits and the (2i+1)th-bits are processed contemporaneously. "E" shows the sign extension of the summation (X + Y)2⁻⁴. When Preset = 1 (at the time To), an initial carry (0) is loaded into the block "7". At the time To, it is made-up the summation of the first two bits of the relevant even flows:${\text{S}}_{\text{0}} {\text{= X}}_{\text{0}} {\text{+Y}}_{\text{0}} {\text{+C}}_{\text{i}} \text{(} {\text{C}}_{\text{i}} \text{=} \text{0)}$

The output carry of the summation (Cp) forms the input carry of the summation of the first two bits of the relevent odd flows:${\text{S}}_{\text{1}} {\text{= X}}_{\text{1}} {\text{+Y}}_{\text{1}} {\text{+C}}_{\text{p}}$

The output carry of this summation (Cd) is loaded into the block "7" (preset = 0) and shall form, at the time T2, the input carry Ci of the following summation onto the even flows and so on.

At the time T8 it is calculated the last bit of the summation:${\text{S}}_{\text{15}} {\text{= X}}_{\text{15}} {\text{+Y}}_{\text{15}} {\text{+C}}_{\text{p}}$ and contemporaneously it is calculated the sign extension:${\text{E = X}}_{\text{15}} {\text{+Y}}_{\text{15}} {\text{+C}}_{\text{d}}$

When Load = 1 (at time T8), the sign extension is loaded into the block "4".

Assuming : Selection = 1 at the time T9, T10, the sign extension is kept correctly for two time instants (4 bits).

Supposing now to calculate:$\text{(} \text{X+Y} {\text{)2}}^{\text{-3}}$

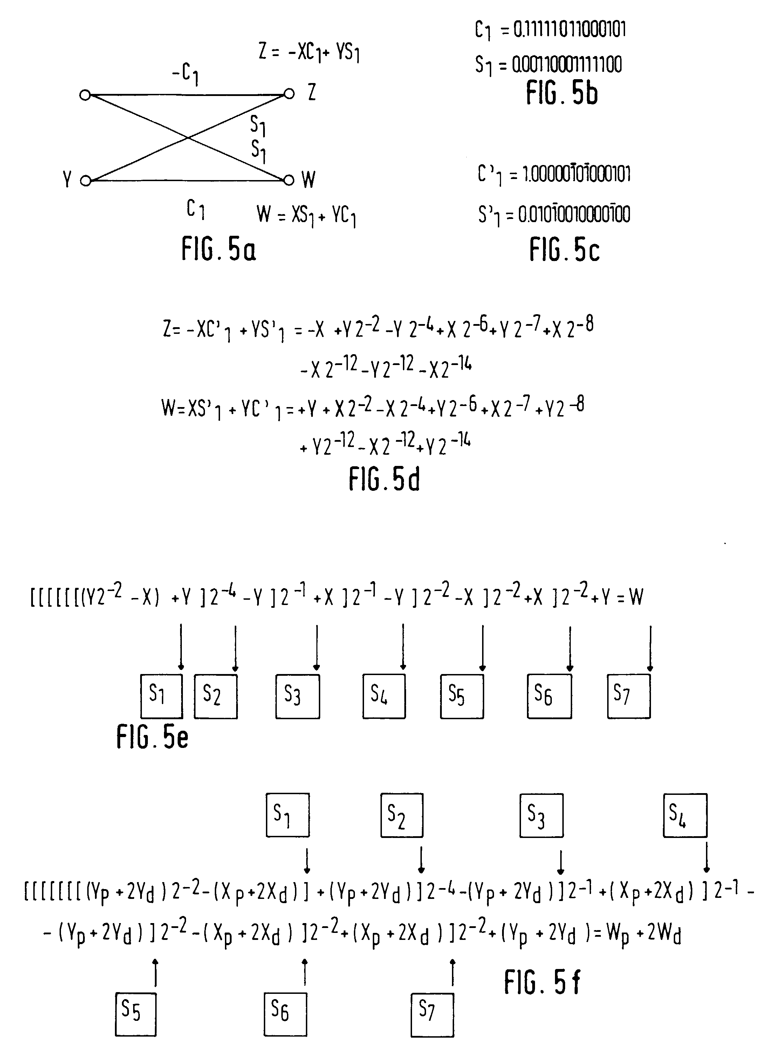

Referring to a variable of weight 2⁰, it can be seen how, for making the correct weighting according to 2-3, it is necessary a sign extension onto three bits. In this case the internal scheme of the circuit shown of Figure 2 appears illustratated in Figure 4a ("ODD" adder), that is different from the Figure 3a in the block "5" (Flip-Flop with selection instead of a simple multiplexer). The running is similar to what seen for the EVEN adder.

The Figure 4b shows a diagram of the summation (X + Y)2⁻³ versus time.

Again, the 2i-th bits and the (2i + 1)th are processed contemporaneously and "E" shows the sign extension of the summation (X + Y)2⁻³. It must be noticed that for making the correct sign extension onto 3 bits and the synchronization it is necesssary to delay one of the two output flows and invert the same output flows. In this case it is possible to make directly a following summation to the variable X 2⁰. In the case in which, instead of carrying out the summation, it must be made the subtraction (e.g. -X + Y) it is negated X and it is put = 1 the initial carry.

### A CALCULATION THROTTLE

When the "Fast" methods for carrying out the transform calculations are used, the forming blocks are some multiplication throttles. They are made up of multiplicands (variable quantities) and multipliers (fixed quantities). As an example of the use of elementary adder/subtractor blocks foreseen for the fulfilment of the multiplication in the throttle inside, the Figure 5a shows the calculation throttle {C1, S1}.

The multiplicands (variable data) are in the form of bit couples entering and outgoing in a serial manner; the multiplicands {C1, S1} are fixed numbers and during the calculation of the DCT transform corespond to the binary representation on m fractionary bits (as many as necessary) of the used sine and cosine values. The multiplications are made by means of a succession of partial summations. Now we shall see how it is possible to reduce the number of partial summations to be made. It can be written (considering shortly the sole output W): 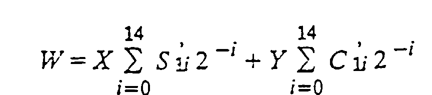 where: *S*$\frac{\text{'}}{\text{1} \text{i}}$, *C*$\frac{\text{'}}{\text{1} \text{i}}$ = {-1,0,1} using therefore a ternary representation for the generical coefficient of the throttle. This selection brings to a reduction of the number of summations to be made, as it shall be tried the representation of multiplying coefficients having the maximum number of zoroes. The Figure 5a shows the coefficients accord{*C*₁ = COS^{π}/₈, *S*₁ = sin^{π}/₈} ing to the representation with 14 fractionary bits. The Figure 5c represents the corresponding *{S*$\frac{\text{'}}{\text{1} \text{i}}$, *C*$\frac{\text{'}}{\text{1} \text{i}}$} according to the ternary representation, where the value - 1 is indicated by 1.

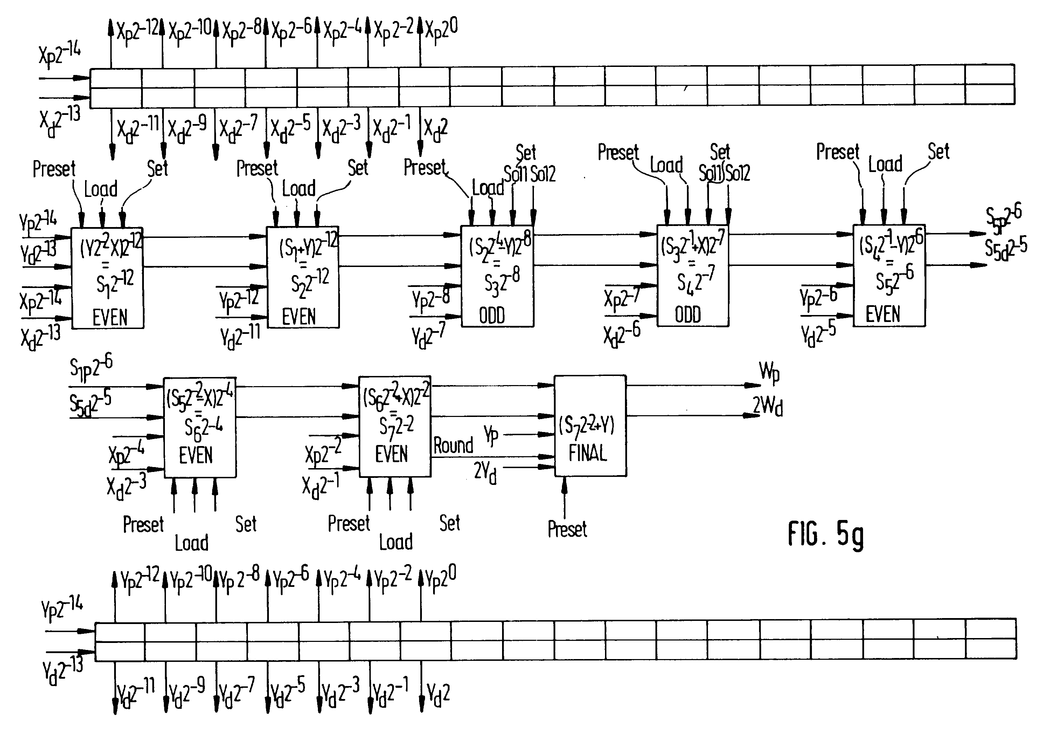

The Figure 5d shows the outputs Z and W as successions of summations and the Figure 5e shows the output W as succession of partial summations. The Figure 5f shows that the succession of partial summations is evidenced by the representation with even bits and odd bits. The Figure 5g represents the corresponding scheme comnpleted with the calculation of W (for getting the output Z of the throttle, a similar scheme is implemented).

As already evidenced, the even bits and the odd bits of each bit couple in input of the generical adder/subtractor (both of EVEN or ODD type), although they have different binary weights, are processed contemporaneously. Using a cascade of EVEN and ODD adders/subtractors, as before illustrated, synchronizing suitably the inputs and control signals, is then possibile to fulfil any calculation throttle. The "FINAL" adder is similar to the EVEN adder, but it does not carry out any sign extension.

It must be noticed the "Round" input of the FINAL adder; it forms the initial carry of the final summation. For making the rounding of the summation, the initial carry should be equal to 1 in all cases at the suitable time instant.

It is easy to verify that:$\text{Round = bit #1} {\text{di S}}_{\text{7}} {\text{2}}^{\text{-2}} \text{= (} {\text{S}}_{\text{7}} {\text{2}}^{\text{-2}} {\text{)}}_{\text{1}}$ and therefore:$\text{Initial carry = carry (1+(} {\text{S}}_{\text{7}} {\text{2}}^{\text{-2}} {\text{)}}_{\text{1}} \text{) = (} {\text{S}}_{\text{7}} {\text{2}}^{\text{-2}} {\text{)}}_{\text{1}}$ thus, for making the rounding, it is sufficient that the initial carry of the final summation arises from a suitable bit of the odd output flow of the last EVEN adder (in the case in which the last adder preceding the FINAL block is an ODD adder, the reasoning is similar).

### THE SERIAL-PARALLEL-SERIAL CONVERTER

It is described the sole circuit part that works onto the even bits, while the implementation for the odd bits is similar.

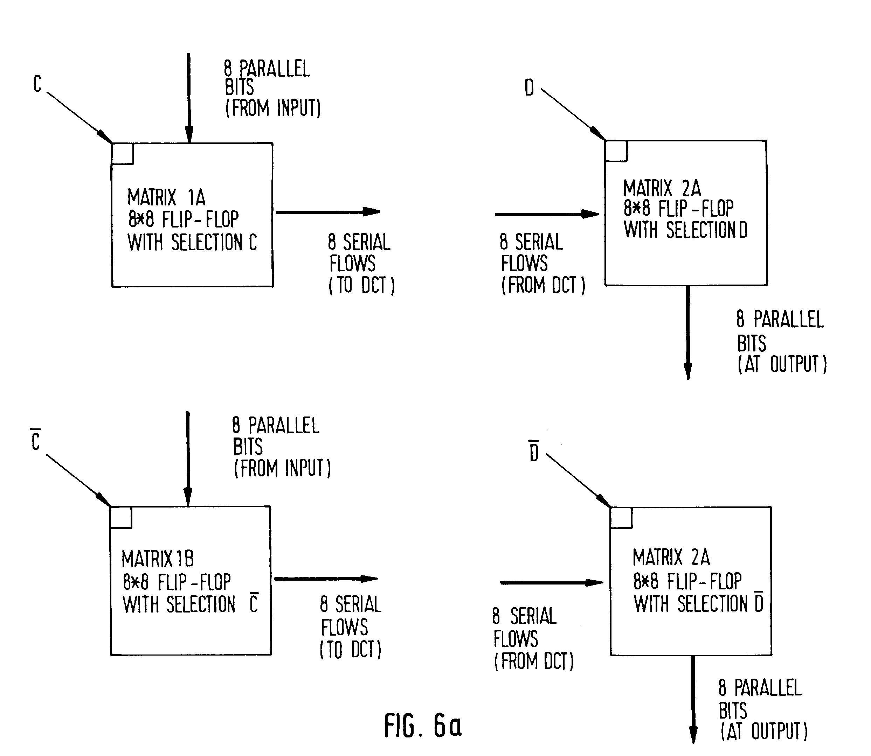

Further we suppose, without prejudicing the generality, that the words entering into and outgoing from the processor DCT are represented by 16 bits. The Figure 6a represents the principle scheme of the basical element forming the serial-parallel-serial converter: two matrix couples (MATRIX 1a, MATRIX 1b) and (MATRIX 2a, MATRIX 2b); while the MATRIX 1a loads the data in parallel, the MATRIX 1b loads the data in series (MATRIX 2a and MATRIX 2b work in similar manner in the serial-parallel conversion). The two matrix couples work respectively:
- a) Onto the 8 even bits of the words with parallel bits, converting them into a serial flow of even bits (MATRIX 1a, MATRIX 1b); in fact the variable input quantities are written in parallel format and then must be converted into serial format before making the DCT calculation. More precisely, 8 parallel bit enter the MATRIX 1a for each of 8 consecutive input words; at the end of this operation, the 8 words are sent to the output contemporaneously in the form of serial bits. The MATRIX 1b works in a similar manner alternating its running over time with the MATRIX 1a.
- b) Onto a flow of even bits with serial bits, converting it into a serial flow of even bits (MATRIX 2a, MATRIX 2b); in fact the variable output quantities of the block DCTC (Figure 1) are written in serial format and then must be converted into parallel format before being sent to the output. More precisely, 8 words in the form of serial bits enter the MATRIX 2a contemporaneously; at the end of this operation, the 8 words are sent to the output in succession and in the form of parallel bits.

The MATRIX 2b works in a similar manner, alternating its running over time with the MATRIX 2a.

Each element of the four matrixes is a Flip-Flop with selection; the selection is controlled by a suitable control signal, having a period equal to 16 clock strokes; in particular:
- Control "C" for (MATRIX 1a, MATRIX 1b)
- Control "D" for (MATRIX 2a, MATRIX 2b).

For example, for the couple (MATRIX 1a, MATRIX 1b):

For C= 0:
- MATRIX 1a loads at input 8 parallel data for each of 8 input words.
- MATRIX 1b unloads at output the 8 serial data of 8 words (loaded in the former half period - C = 1).

For C = 1:
- MATRIX 1a unloads at output the 8 serial data of 8 words (loaded in the former half period - C = 0).
- MATRIX 1b loads at input 8 parallel data for each of 8 input words.

The couple (MATRIX 2a, MATRIX 2b) makes the opposite operation with respect to (MATRIX 1a, MATRIX 1b), being controlled by the signal D.

It must be noticed that the delay introduced into the DCT calculation is generally equal to: N∗8 + K, then D is delayed (and negated) with respect to C of K clock strokes.

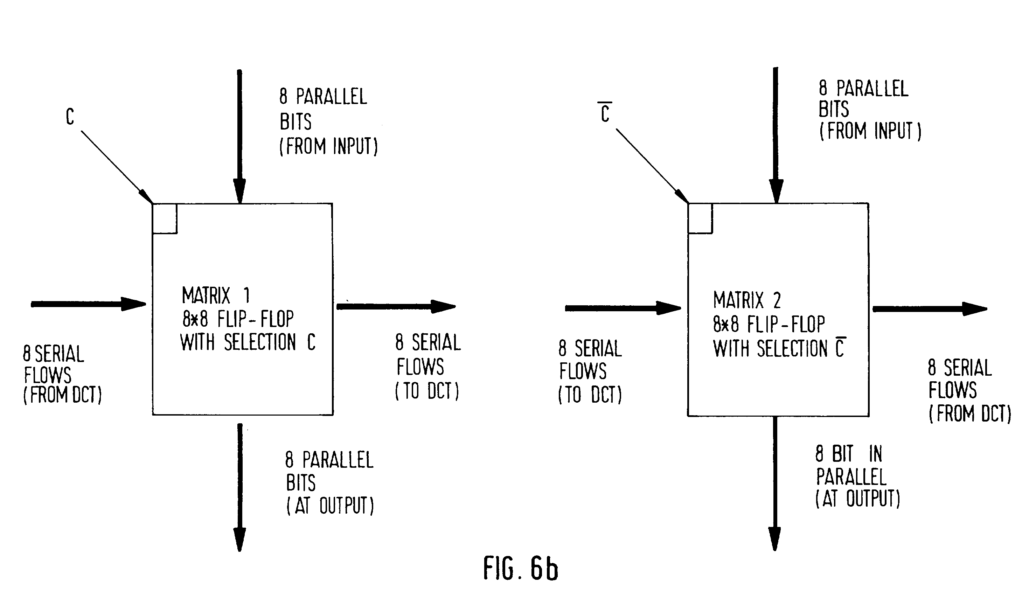

In the case in which the delay introduced into the DCT calculation is equal to N∗8 (K = 0), it is possible to use a sole matrix couple (MATRIX 1, MATRIX 2) for carrying out the above mentioned operations. In particular we can think to combinate the operations made by MATRIX 1a and MATRIX 1b into a sole MATRIX 1; similarly we can think to combinate the operations made by MATRIX 1b and MATRIX 2a into a sole MATRIX 2. The resulting scheme is shown in Figure 6b and the running principle is the following one:

For C = 0:
- MATRIX 1 loads in input the parallel data; CONTEMPORANEOUSLY we have the parallel output of the data loaded serially in the precdeing half period of C (C = 1).
- MATRIX 2 loads in input the serial data; CONTEMPORANEOUSLY we have the serial output of the data loaded in parallel in the preceding half period of C (C = 0).

For C = 1:
- MATRIX 2 loads in input the parallel data; CONTEMPORANEOUSLY we have the parallel output of the data loaded serially in the preceding half period of C (C = 1).
- MATRIX 1 loads in input the serial data; CONTEMPORANEOUSLY we have the serial output of the data loaded in parallel in the preceding half period of C (C = 0).

It is important to notice that in this manner all elements of the structure are always working; this is possible as the calculation time of bidimensional DCT (cascade of DCTR, MEMCG, DCTC) has been made multiple of 8 clock strokes. The two matrixes (MATRIX 1, MATRIX 2) work in an alternated manner, or when 8 words with parallel bits income into and outgo from one of them, the other matrix incomes and outgoes in the same time 8 words of serial bits. All of the these two matrixes work in one of the two manners onto 8 words that income or outgo out sequencially over the time (if they are made-up of parallel bits, and viceversa income and outgo contemporanously (if they are made-up of serial bits).

### THE EXCHANGE MEMORY (MEMCG)

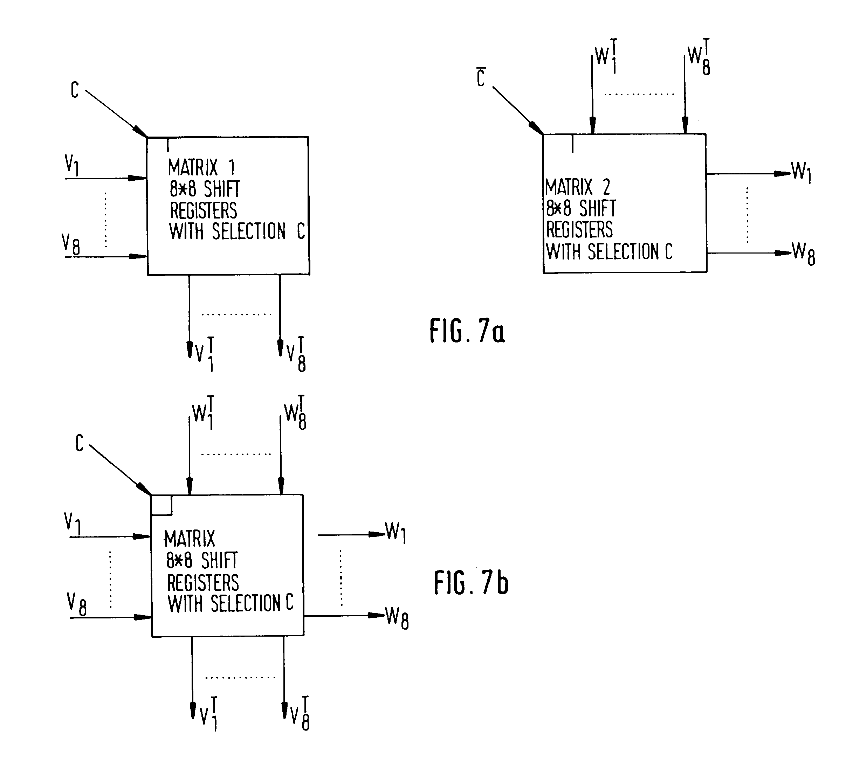

The block MEMCG exchanges the lines and columns of a matrix of 8∗8 samples, downstream a monodimensional transform; then it carries out the transposition of a matrix. Similarly to what was shown for the serial-parallel-serial converter, it is described the sole circuit part working onto the even bits; the implementation is similar for the odd bits. Basically the running principle is similar to the principle of PARSERG; the main element is a matrix couple (Figure 7a). Each element of a matrix is a generical memory element with selection; the selection is controlled by a suitable control signal having a period equal to 128 clock strokes.

The input flows are of serial type and form the 8 vectors of the matrix (each vector is formed by 8 elements; each element of a generical vector is formed by 8 variable even bits).

With reference to the Figure 7a:

For C = 0:
- MATRIX 1 loads 8 vectors V1... V8 , while MATRIX 2 unloads 8 vectors W1....W8 loaded in the preceding half period of C (C = 1).

For C = 1:
- MATRIX 2 loads 8 vectors W1^{T} ... W8^{T}, while MATRIX 1 unloads 8 vectors V1^{T}....V8^{T} loaded in the preceding half period of C (C = 0).

The two matrixes were been drawn in a different manner for allowing the comprehension of a sole structure fulfilment. Similarly to what was explained with respect to the PARSERG, it is possible to filfil a sole matrix (Figure 7b), that has all elements always in working phase.
- When C = 0, the vectors V1 .... V8 are loaded and CONTEMPORANEOUSLY the vectors W1.... W8 loaded in the preceding half period of C (C = 1) are unloaded.
- When C = 1, the vectors W1^{T}.... W8^{T} are loaded and CONTEMPORANEOUSLY the vectors V1^{T}.... V8^{T} loaded in the former half period of C (C = 0) are unloaded.

### THE SHIFT ON SAMPLES OF TRANSFORMED SIGNAL (INTIG - INTOG).

The DCT calculation is made without any scaling; but usually the DCT data are reduced in precision for allowing the transmission. Therefore it is advantageous to insert an element that makes a shift onto the transform coefficients; in particular it is advantageous the use of a scaler that multiplies by 2^{-n/8}, where n is an integral number.

The reasons of this selection are the following ones:
- A certain simplicity of the Hardware implementation
- Using the factor 2^{-n/8} the shift is constant in percentage.

In reception it must be used an inverse scaler that multiplies by 2^{n/8} the DCT coefficients before making the non-transform. It can written for the transmission scaler:${\text{2}}^{\text{-} \text{n} \text{/8}} \text{= 2} {\text{}}^{\text{-} {\text{n}}_{\text{1}} \text{/8}} \text{* 2} {\text{}}^{\text{-} {\text{n}}_{\text{2}}} \text{,} \text{n =} \text{0...127}$ with:
*n*₁ = 0...7
*n*₂ = 0...15

Then the shift is made, in transmission, by a multiplication by a fixed coefficient (2^{-n1/8}, n1 = 0...7) and a simple shift.

The Figure 8a shows the chain of two shifts in transmission. The ideal inverse operation in reception is represented in Figure 8b. For eliminating the drawback of having 14 fixed multiplicand factors (2^{-n1/8} in transmission; 2^{n1/8} in reception, n1= 0.....7) the shift in reception is made in the following manner:${\text{2}}^{\text{n} \text{/8}} \text{=} \text{2} {\text{}}^{{\text{n}}_{\text{2}} \text{+1}} \text{* 2} {\text{}}^{\text{-(8-} {\text{n}}_{\text{1}} \text{)/8}} {\text{n}}_{\text{1}} \text{≠} \text{0}$${\text{2}}^{\text{n} \text{/8}} \text{= 2} {\text{}}^{{\text{n}}_{\text{2}}} {\text{n}}_{\text{1}} \text{= 0}$

It must be noticed, in the Figures 8a and 8b, the different order in which there are placed the multiplier and the shifter in transmission and in reception. In transmission the coefficients of the transformed signal are shifted "downwards" (multiplied by 2^{-n/8}); therefore, with the aim of not lossing the precision it is necessary to make at first the multiplication by 2^{-n1/8} and then the shift of 2⁻ⁿ². In reception the coefficients of the transformed signal must be shifted "upwards" (multiplication by 2^{n/8}); then it is necessary to make at first the shift 2ⁿ²⁺¹ and then the multiplication by 2^{-(8-n1)/8}.

## Claims

1. A method for performing a bi-dimensional transformation of the dimension M*M, which is orthogonal and separable into two mono-dimensional transformations performed on the basis of butterfly computations, the method comprising operations including summations, subtractions and multiplications on incoming and outgoing words written in the form of parallel bits, each said incoming and outgoing word having a maximum length of 2*M bits, said summations, subtractions and multiplications being performed on variable data represented in the form of words each having a length of 2*M bits,
**characterised** in that said summation and subtraction operations on said variable data, e.g. on a variable${\text{S = {s}}_{\text{0}} {\text{, s}}_{\text{1}} {\text{, s}}_{\text{2}} {\text{, s}}_{\text{3}} {\text{, ..., s}}_{\text{14}} {\text{, s}}_{\text{15}} \text{},}$ and said operations of multiplication of said variable data by fixed coefficients are made in parallel on couples of bits each consisting of an even bit and an odd bit, the data being presented in the form of two serial bit streams, one comprising the even bits and the other comprising the odd bits of the variable data, e.g. in the form of bit streams${\text{S}}_{\text{p}} {\text{= {s}}_{\text{0}} {\text{, s}}_{\text{2}} {\text{, ..., s}}_{\text{14}} \text{}}$ and${\text{S}}_{\text{d}} {\text{= {s}}_{\text{1}} {\text{, s}}_{\text{3}} {\text{, ..., s}}_{\text{15}} \text{},}$ so that the speed Rₚ of the incoming and outgoing words, which are presented in the form of words with parallel bits, is equal to the speed Rₛ of the internal bit streams.

2. The method of claim 1, wherein only two calculation elements are used, the first element being adapted for the summation or subtraction of two variable quantities followed by the multiplication by 2^{-m}, with m being an even integer ≥ 0, and the second element being adapted for the summation or subtraction of two variable quantities followed by the multiplication by 2⁻ⁿ, with n being an odd integer ≥ 0, said calculation elements differing only in that the second element includes a delay element to insert a delay by one clock period on one bit of each bit couple outgoing from the calculation element.

3. The method of claim 1 or 2, wherein said transformation is a discrete cosine transformation of the dimension M*M, with M being a power of 2.

4. The method of claim 3, wherein said transformation has the dimension 8*8 and said variable data are internally represented with 16-bit precision.

5. A circuit for carrying out the method of any preceding claim, characterised by
means for converting the incoming words X = {x₀, x₁, x₂, x₃, ..., x₁₄, x₁₅} from the form of parallel bits to the form of words X = {x₀, x₁}, {x₂, x₃}, ..., {x₁₄, x₁₅} represented by coupled bits serially distributed over time,
means for applying a mono-dimensional transformation to the lines of a block of M*M data, treating the data in the form of serially distributed bits,
means for transposing the elements of said M*M data block from lines to columns,
means for applying the mono-dimensional transformation to the columns of said M*M data block, and
means for converting the serial bit couples S = {{s₀, s₁}, {s₂, s₃},...,{s₁₄, s₁₅}} to words in the form or parallel bits S = {s₀, s₁, s₂, s₃,..., s₁₄, s₁₅}.

6. The circuit of claim 5, implemented on a silicon basis and including
an input interface (INTIG),
a converter (PARSERG) for converting incoming words from the form of parallel bits to the form of words represented by serial bit couples and for converting outgoing words in the opposite sense,
a first operator (DCTR) performing the mono-dimensional DCT transformation,
means (MEMCG) performing the transposition from lines to columns,
a second operator (DCTC) performing mono-dimensional transformation, and
means (INTOG) for scaling the outgoing words.

## Patentansprüche

1. Verfahren zur Durchführung einer zweidimensionalen Transformation der Dimension M*M, die rechtwinklig und in zwei aufgrund von Butterfly-Berechnungen durchgeführte eindimensionale Transformationen trennbar ist, wobei das Verfahren Operationen umfaßt, zu denen Summationen, Subtraktionen und Multiplikationen an in Form von Parallelbits geschriebenen ankommenden und abgehenden Wörtern gehören, wobei jedes ankommende und abgehende Wort eine Maximallänge von 2*M Bits aufweist und die Summationen, Subtraktionen und Multiplikationen an in Form von Wörtern jeweils einer Länge von 2*M Bits wiedergegebenen variablen Daten durchgeführt werden,
dadurch **gekennzeichnet**, daß die Summations- und Subtraktionsoperationen an den variablen Daten, z.B. an einer Variablen${\text{S = {s}}_{\text{0}} {\text{, s}}_{\text{1}} {\text{, s}}_{\text{2}} {\text{, s}}_{\text{3}} {\text{, ...,s}}_{\text{14}} {\text{, s}}_{\text{15}} \text{},}$ und die Multiplikationsoperationen der variablen Daten mit festen Koeffizienten parallel an Bitpaaren durchgeführt werden, deren jedes aus einem geraden und einem ungeraden Bit besteht, wobei die Daten in Form zweier serieller Bitfolgen wiedergegeben sind, von denen die eine die geraden und die andere die ungeraden Bits der variablen Daten enthält, z.B. in Form von Bitfolgen${\text{S}}_{\text{p}} {\text{= {s}}_{\text{0}} {\text{, s}}_{\text{2}} {\text{, ..., s}}_{\text{14}} \text{}}$ und${\text{S}}_{\text{d}} {\text{= {s}}_{\text{1}} {\text{, s}}_{\text{3}} {\text{, ..., s}}_{\text{15}} \text{},}$ so daß die Geschwindigkeit Rₚ der ankommenden und abgehenden, in Form von Wörtern mit parallelen Bits wiedergegebenen Wörter gleich der Geschwindigkeit Rₛ der internen Bitfolgen ist.

2. Verfahren nach Anspruch 1, wobei nur zwei Rechenelemente verwendet werden, von denen das erste zur Summation oder Subtraktion zweier Variabler und anschließender Multiplikation mit 2^{-m} ausgelegt ist, wobei m eine gerade ganze Zahl ≥ 0 ist, wobei das zweite Element zur Summation oder Subtraktion zweier Variabler und anschließender Multiplikation mit 2⁻ⁿ ausgelegt ist, wobei n eine ungerade ganze Zahl ≥ 0 ist, und wobei die Rechenelemente sich nur darin unterscheiden, daß das zweite Element ein Laufzeitglied aufweist, um an einem Bit jedes von dem Rechenelement abgehenden Bitpaares eine Verzögerung um eine Taktperiode einzufügen.

3. Verfahren nach Anspruch 1 oder 2, wobei die Transformation eine diskrete Cosinustransformation der Dimension M*M und M eine Potenz von 2 ist.

4. Verfahren nach Anspruch 3, wobei die Transformation die Dimension 8*8 hat und die Variablen intern mit 16-Bit-Genauigkeit wiedergegeben sind.

5. Schaltung zur Durchführung des Verfahrens nach einem der vorhergehenden Ansprüche, **gekennzeichnet** durch
eine Einrichtung zum Umsetzen von ankommenden Wörtern X = {x₀, x₁, x₂, x₃, ..., x₁₄, x₁₅} aus der Form von Parallelbits in die Form von durch zeitlich seriell verteilte Bitpaare wiedergegebenen Wörtern X = {{x₀, x₁}, {x₂, x₃}, ..., {x₁₄, x₁₅}},
eine Einrichtung zum Anwenden einer eindimensionalen Transformation auf die Zeilen eines M*M-Datenblocks, wobei die Daten in Form von seriell verteilten Bits behandelt werden,
eine Einrichtung zum Umsetzen der Elemente der M*M-Datenblöcke aus Zeilen in Spalten,
eine Einrichtung zum Anwenden der eindimensionalen Transformation auf die Spalten des M*M-Datenblocks und
eine Einrichtung zum Umsetzen der seriellen Bitpaare S = {{s₀, s₁}, {s₂, s₃}, ..., {s₁₄, s₁₅}} in Wörter in Form von Parallelbits S = {s₀, s₁, s₂, s₃, ..., s₁₄, s₁₅}.

6. Schaltung nach Anspruch 5, ausgeführt auf Siliciumbasis und enthaltend
ein Eingangsinterface (INTIG),
einen Converter (PARSERG) zum Umsetzen von ankommenden Wörtern von der Form von Parallelbits in die Form von durch serielle Bitpaare wiedergegebene Wörter und zum Umsetzen der abgehenden Wörter im umgekehrten Sinn,
einen die eindimensionale DCT-Transformation durchführenden ersten Operator (DCTR),
eine die Umsetzung von Zeilen in Spalten durchführende Einrichtung (MEMCG),
einen eine eindimensionale Transformation durchführenden zweiten Operator (DCTC), und
eine Einrichtung (INTOG) zum Skalieren der abgehenden Wörter.

## Revendications

1. Procédé pour effectuer une transformation bidimensionnelle de la dimension M*M, qui est orthogonale et séparable en deux transformations unidimensionnelles effectuées sur la base de calculs en papillon, le procédé comprenant des opérations dont des additions, des soustractions et des multiplications sur des mots d'arrivée et de départ écrits sous la forme de bits en parallèle, chacun desdits mots d'arrivée et de départ ayant une longueur maximale de 2*M bits, lesdites additions, soustractions et multiplications étant effectuées sur des données variables représentées sous la forme de mots ayant chacun une longueur de 2*M bits
**caractérisé** en ce que lesdites opérations d'addition et de soustraction sur lesdites données variables, par exemple sur une donnée variable${\text{S = {s}}_{\text{0}} {\text{, s}}_{\text{1}} {\text{, s}}_{\text{2}} {\text{, s}}_{\text{3}} {\text{, ..., s}}_{\text{14}} {\text{, s}}_{\text{15}} \text{},}$ et lesdites opérations de multiplications desdites données variables par des coefficients fixes sont effectuées en parallèle sur des paires de bits comprenant chacune un bit pair et un bit impair, les données étant présentées sous la forme de deux flux de bits en série, l'un comprenant les bits pairs et l'autre comprenant les bits impairs des données variables, par exemple sous la forme de flux de bits${\text{S}}_{\text{p}} {\text{= {s}}_{\text{0}} {\text{, s}}_{\text{2}} {\text{, ..., s}}_{\text{14}} \text{}}$ et${\text{S}}_{\text{d}} {\text{= {s}}_{\text{1}} {\text{, s}}_{\text{3}} {\text{, ..., s}}_{\text{15}} \text{},}$ de façon que la vitesse Rₚ des mots d'arrivée et de départ, qui sont présentés sous la forme de mots avec des bits en parallèle, soit égale à la vitesse Rs des flux internes de bits.

2. Procédé selon la revendication 1, dans lequel seulement deux éléments de calcul sont utilisés, le premier élément étant adapté pour l'addition ou la soustraction de deux quantités variables suivie par la multiplication par 2^{-m}, m étant un entier pair ≥ 0, et le second élément étant adapté pour l'addition ou la soustraction de deux quantités variables suivie par la multiplication par 2⁻ⁿ, n étant un entier impair ≥ 0, lesdits éléments de calcul ne différant qu'en ce que le second élément comprend un élément à retard pour introduire un retard d'une période d'horloge sur un seul bit de chaque paire de bits partant de l'élément de calcul.

3. Procédé selon la revendication 1 ou 2, dans lequel ladite transformation est une transformation discrète en cosinus de la dimension M*M, M étant une puissance de 2.

4. Procédé selon la revendication 3, dans lequel ladite transformation a la dimension 8*8 et lesdites données variables sont représentées intérieurement avec une précision de 16 bits.

5. Circuit pour mettre en oeuvre le procédé selon l'une quelconque des revendications précédentes, caractérisé par
un moyen pour convertir les mots d'arrivée X = {x₀, x₁, x₂, x₃, ..., x₁₄, x₁₅}en les faisant passer de la forme de bits en parallèle à la forme de mots X = {{x₀, x₁}, {x₂, x₃}, ..., {x₁₄, x₁₅}} représentés par des bits couplés à répartition en série dans le temps,
un moyen pour appliquer une transformation unidimensionnelle aux lignes d'un bloc de données M*M, traiter les données sous la forme de bits à répartition en série,
un moyen pour transposer de lignes en colonnes les éléments dudit bloc de données M*M,
un moyen pour appliquer la transformation monodimensionnelle aux colonnes desdits blocs de données M*M, et
un moyen pour convertir les paires de bits en série S = {{s₀, s₁}, {s₂, s₃}, ..., {s₁₄, s₁₅}} en mots sous la forme de bits en parallèle S = {s₀, s₁, s₂, s₃, ..., s₁₄, s₁₅}

6. Circuit selon la revendication 5, mis en oeuvre sur une base en silicium et comprenant
une interface d'entrée (INTIG),
un convertisseur (PARSERG) pour convertir des mots d'arrivée qui sont sous la forme de bits en parallèle en les transformant en mots représentés par des paires de bits en série et pour convertir en sens inverse des mots de départ,
un premier opérateur (DCTR) effectuant la transformation DCT unidimensionnelle,
un moyen (MEMCG) effectuant la transposition de lignes en colonnes,
un deuxième opérateur (DCTC) effectuant une transformation unidimensionnelle, et
un moyen (INTOG) pour mettre à l'échelle les mots de départ.
